# EUROPEAN PATENT APPLICATION

(11) **EP 4 779 473 A1**
(43) Date of publication of application: **22.07.2026**
(21) Application number: 24870344.9
(22) Date of filing: 02.09.2024
(51) Int. Cl.: G06F 9/54

(54) **DATA PROCESSING METHOD AND APPARATUS**

(30) Priority: 25.09.2023 CN 202311246217
(71) Applicant: HUAWEI TECHNOLOGIES CO., LTD., Shenzhen 518129 (CN)
(72) Inventor: ZHU, Caixi, Shenzhen, Guangdong 518129 (CN); GAO, Jianbo, Shenzhen, Guangdong 518129 (CN)
(74) Representative: Goddar, Heinz J.
(86) International application number: PCT/CN2024/116310
(87) International publication number: WO 2025/066798

(57) **Abstract**

This application provides a data processing method and apparatus. The method includes: After sending a first request message corresponding to a first write request message, and before receiving a first response message, if a first management unit receives another write request with a same Cacheline address as the first write request message is received, a plurality of pieces of data with the same Cacheline address are written into cache space corresponding to the first management unit, and then the data is written into storage space corresponding to a second management unit. This reduces interaction with the second management unit in a process of writing the plurality of pieces of data, to effectively reduce data processing latency and improve overall data processing efficiency.

## Description

This application claims priority to Chinese Patent Application No. 202311246217.6, filed with the China National Intellectual Property Administration on September 25, 2023 and entitled "DATA PROCESSING METHOD AND APPARATUS", which is incorporated herein by reference in its entirety.

### TECHNICAL FIELD

Embodiments of this application relate to the field of data storage, and in particular, to a data processing method and apparatus.

### BACKGROUND

In a modem computing system, a shared memory (shared memory) is used in a multi-core chip, to improve inter-process communication efficiency. A series of memory consistency models (Memory Consistency Models) are defined around an order of software read and write operations and an observable order of execution results of read and write operations on hardware. Common memory consistency models include sequential consistency (SC, Sequential Consistency), total store order (TSO, Total Store Order), and relax model (RM, Relax Model). When two types of models interact with each other, that is, after an SO (Strict Order) request sequence on a strong side with an order constraint enters a weak side, the weak side needs to ensure that an observable order of final processing results meets an expectation of the strong side. If processing is performed in a completely serial manner on the weak side, a bandwidth is greatly impacted. A typical scenario is interaction between the multi-core chip and a peripheral device. A communication bandwidth between the multi-core chip and the peripheral device is critical to system performance. Therefore, how to efficiently process an SO request becomes a key factor to limit the bandwidth.

### SUMMARY

This application provides a data processing method and apparatus, to improve SO request processing efficiency to some extent.

To achieve the foregoing objective, this application uses the following technical solutions.

According to a first aspect, an embodiment of this application provides a data processing method. The method includes: A first management unit receives a first write request message, where the first write request message is used to request to write first data into a target cache line Cacheline; in response to the first write request message, the first management unit sends a first request message to a second management unit, where the first request message is used to request permission of the target Cacheline; if the first management unit receives at least one second write request before the first management unit receives a first response message fed back by the second management unit, where the at least one second write request is used to request to write at least one piece of second data into the target Cacheline, the first management unit caches, after receiving the first response message, the first data and the at least one piece of second data into first storage space corresponding to the first management unit, where the first response message indicates the permission of the target Cacheline; and the first management unit writes target data in the first storage space into the second management unit, where the target data includes the first data and the at least one piece of second data.

In this way, according to this application, parallel processing of consecutive small packet data with a same Cacheline address within a specific range can be implemented, to improve data processing efficiency. In addition, according to this application, a manner of first performing parallel processing on the consecutive small packet data with the same Cacheline address on a memory side, and then writing the data into a storage side, to reduce bus data interaction between the memory side and the storage side. This reduces processing latency and increases a data write bandwidth.

In a possible implementation, the first management unit includes a first management sub-node and a second management sub-node, and that the first management unit caches, after receiving the first response message, the first data and the at least one piece of data into the first storage space corresponding to the first management unit includes: In response to the first response message, the first management sub-node sends a second request message to the second management sub-node, where the second request message indicates that the permission of the target Cacheline is obtained, and is used to request writing the first data into the target Cacheline; the first management sub-node receives a second response message fed back by the second management sub-node, where the second response message indicates that the first data is allowed to be written; in response to the second response message, the first management sub-node requests, from the second management sub-node, to write the at least one piece of second data, and in a process of requesting, by the first management sub-node and from the second management sub-node, to write the at least one piece of second data, the second management sub-node obtains the first data, and writes the first data into the first storage space; and the second management sub-node obtains the second data, and writes the second data into the second storage space.

In this way, according to this application, a handshake process for small packets with a same Cacheline address is completed internally on the memory side (which may also be understood as an upstream node), to reduce interaction with a bus, reduce latency, and increase a bandwidth.

In a possible implementation, requesting, from the second management sub-node, to write the at least one second data includes: The first management sub-node sends a third request message to the second management sub-node, where the third request message is used to request the permission of the target Cacheline; the first management sub-node receives a third response message sent by the second management sub-node, where the third response message indicates the permission of the target Cacheline; in response to the third response message, the first management sub-node sends a fourth request message to the second management sub-node, where the fourth request message indicates to write a single piece of second data into the target Cacheline; and in response to the fourth request message, the second management sub-node obtains the single piece of second data, and writes the single piece of second data into the first storage space after writing the first data into the first storage space.

In this way, according to this application, parallel processing of small packets with a same Cacheline address is implemented within a module on the memory side, to effectively improve data processing efficiency.

In a possible implementation, the method further includes: If no other request to write data into the target Cacheline is received before the first management unit receives the first response message fed back by the second management unit, the first management unit requests, from the second management unit, to write the third data into the target Cacheline. In this way, according to this application, when no small packet with the same Cacheline address is received within a Merge window, so that processing can be performed based on an original I/O Cache mode, to avoid introducing a negative gain.

For example, a small packet with the same Cacheline address received outside the Merge window is also processed based on the original I/O Cache mode.

In a possible implementation, that the first management unit requests, from the second management unit, to write the third data into the target Cacheline includes: The first management unit sends a fifth request message to the second management unit, where the fifth request message is used to request to write the first data into the target Cacheline; and in response to a fifth response message sent by the second management unit, the first management unit sends a data sending indication message to a data sending module, where the data sending indication message indicates the data sending module to send the first data to the second management unit, and the fifth response message indicates that the first data is allowed to be written. In this way, according to this application, data is written into the storage space through interaction with the management unit on the storage side.

According to second aspect, this application provides a data processing apparatus. The data processing apparatus includes a first management unit and a second management unit; the first management unit is configured to receive a first write request message, where the first write request message is used to request to write first data into a target cache line Cacheline; the first management unit is further configured to: in response to the first write request message, send a first request message to the second management unit, where the first request message is used to request permission of the target Cacheline; the first management unit is further configured to: if the first management unit receives at least one second write request before the first management unit receives a first response message fed back by the second management unit, where the at least one second write request is used to request to write at least one piece of second data into the target Cacheline, cache, after receiving the first response message, the first data and the at least one piece of second data into first storage space corresponding to the first management unit, where the first response message indicates the permission of the target Cacheline; and the first management unit is further configured to write target data in the first storage space into the second management unit, where the target data includes the first data and the at least one piece of second data.

In a possible implementation, the first management unit includes a first management sub-node and a second management sub-node; the first management sub-node is configured to: in response to the first response message, send a second request message to the second management sub-node, where the second request message indicates that the permission of the target Cacheline is obtained, and is used to request to write the first data into the target Cacheline; the first management sub-node is further configured to receive a second response message fed back by the second management sub-node, where the second response message indicates that the first data is allowed to be written; the first management sub-node is further configured to: in response to the second response message, request, from the second management sub-node, to write the at least one piece of second data, and in a process of requesting, by the first management sub-node and from the second management sub-node, to write the at least one piece of second data, the second management sub-node obtains the first data and writes the first data into the first storage space; and the second management sub-node is configured to obtain the second data and write the second data into the second storage space.

In a possible implementation, the first management sub-node is further configured to send a third request message to the second management sub-node, where the third request message is used to request the permission of the target Cacheline; the first management sub-node is further configured to receive a third response message sent by the second management sub-node, where the third response message indicates the permission of the target Cacheline; the first management sub-node is further configured to: in response to the third response message, send a fourth request message to the second management sub-node, where the fourth request message indicates to write a single piece of second data into the target Cacheline; and the second management sub-node is further configured to: in response to the fourth request message, obtain the single piece of second data, and write the single piece of second data into the first storage space after writing the first data into the first storage space.

In a possible implementation, the first management unit is further configured to: if no other request to write data into the target Cacheline is received before the first management unit receives the first response message fed back by the second management unit, request, from the second management unit, to write the third data into the target Cacheline.

In a possible implementation, the first management unit is configured to send a fifth request message to the second management unit, where the fifth request message is used to request to write the first data into the target Cacheline; and the first management unit is further configured to: in response to a fifth response message sent by the second management unit, send a data sending indication message to a data sending module, where the data sending indication message indicates the data sending module to send the first data to the second management unit, and the fifth response message indicates that the first data is allowed to be written.

According to a third aspect, an embodiment of this application provides an electronic device. The electronic device includes one or more processors, a memory, and one or more computer programs, the one or more computer programs are stored in the memory, and when the computer programs are executed by the one or more processors, the electronic device is enabled to execute instructions of a method according to the first aspect or any possible implementation of the first aspect.

According to a fourth aspect, an embodiment of this application provides a computer-readable medium for storing a computer program, and the computer program includes instructions for performing the method according to the first aspect or any possible implementation of the first aspect.

According to a fifth aspect, an embodiment of this application provides a computer program, and the computer program includes instructions for performing the method according to the first aspect or any possible implementation of the first aspect.

According to a sixth aspect, an embodiment of this application provides a chip. The chip includes one or more interface circuits and one or more processors, the interface circuit is configured to receive a signal from a memory of an electronic device and send the signal to the processor, the signal includes computer instructions stored in the memory, and when the processor executes the computer instructions, the electronic device is enabled to execute instructions of the method according to the first aspect or any possible implementation of the first aspect.

### BRIEF DESCRIPTION OF DRAWINGS

To describe technical solutions in embodiments of this application more clearly, the following briefly describes the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic flowchart of an example of a data processing method;
FIG. 2 is a schematic flowchart of an example of a data processing method;
FIG. 3 is a schematic flowchart of an example of a data processing method;
FIG. 4 is a schematic flowchart of a data processing method according to an embodiment of this application;
FIG. 5 is a schematic flowchart of a data processing method according to an embodiment of this application;
FIG. 6A and FIG. 6B are a schematic flowchart of a data processing method according to an embodiment of this application;
FIG. 7A and FIG. 7B are a schematic flowchart of a data processing method according to an embodiment of this application; and
FIG. 8 is a diagram of a structure of an example of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In this specification and claims in embodiments of this application, the terms "first", "second", and the like are intended to distinguish between different objects, but are not used to describe a particular order of the objects. For example, a first target object, a second target object, and the like are used for distinguishing between different target objects, but are not used for describing a specific order of the target objects.

In embodiments of this application, the word such as "example" or "for example" is used to represent an example, an illustration, or a description. Any embodiment or design solution described as an "example" or "for example" in embodiments of this application should not be explained as being more preferred or having more advantages than another embodiment or design solution. Exactly, use of the term "example", "for example", or the like is intended to present a related concept in a specific manner.

In descriptions of embodiments of this application, unless otherwise stated, "plurality of" means two or more. For example, a plurality of processing units means two or more processing units, and a plurality of systems means two or more systems.

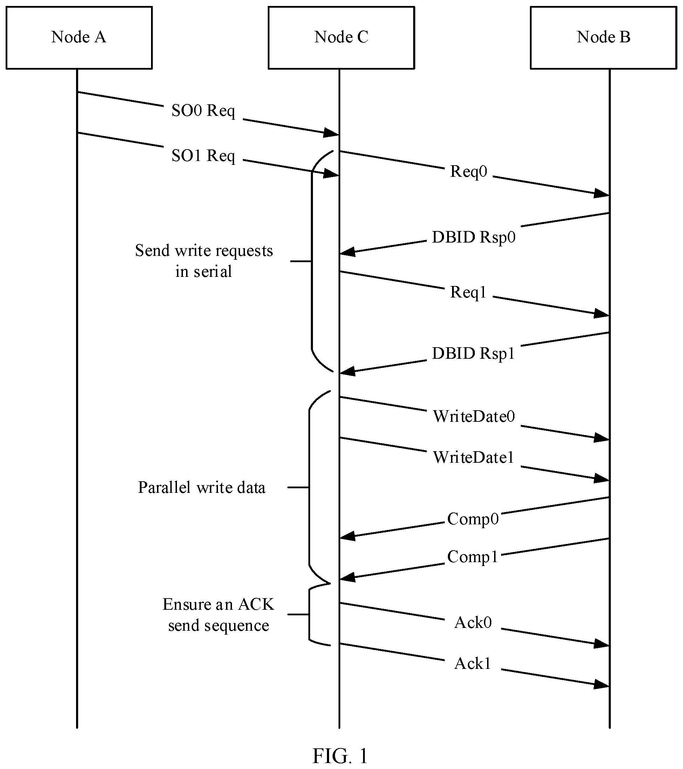

FIG. 1 is a schematic flowchart of an example of a data processing method in a conventional technology. Refer to FIG. 1. The following is specifically included.

A node A is a node on a Model-0 side, a node C is an upstream boundary node, and a node B is a downstream node.
(1) The node A sends a write request sequence (including SO0 Req and SO1 Req) with an order constraint to the node C.
(2) The node C sends a write request to the node B in a serial manner.

Specifically, the node C sends Req0 to the node B in response to SO0 Req (Request, request). After DBID Rep0 (Response, response) fed back by the node B is received, Req1 corresponding to SO1 Req is sent to the node B, and DBID Rep1 fed back by the node B is received. DBID Rep carries a location at which data is received (which may also be understood as a location into which the data is written, and the location is in storage space of the node B).

(3) The node C and the node B perform a data write operation in parallel.

For example, the node C sends Write Data0 and Write Data1 to the node B to request to write corresponding data. After the node B writes the data into the storage space, Comp0 (Completion, completion) and Comp1 are sent to the node C, to indicate that the corresponding data are already written.

(4) The node C sends ACK to the node B.

For example, after receiving a completion response, the upstream node C needs to send an Ack (Acknowledge) signal to the node B based on a sequence of the write requests (namely, SO0 Req and SO1 Req) to inform the downstream (namely, the node B) that corresponding request results are already globally observable. An observable order of the request results is ensured through sequential Ack handshake.

In the manner shown in FIG. 1, it can be ensured in a manner of DBID handshake that data on the node B side is written into data. In other words, the node B side writes received data into a cache based on a sequence of received Req. In this way, the SO request sequence can be partially processed in parallel. However, this manner still has the following problems:
(1) A related operation of a next data packet needs to wait for a DBID response corresponding to a previous data packet before processing can be continued. Consequently, there is still a serial processing part, and latency of waiting for the response is high, resulting in a low request bandwidth.
(2) The downstream node B needs to handshake with the upstream node C a plurality of times to ensure a data writing order. This process has high latency and much interaction, causing a communication burden and affecting data writing efficiency.

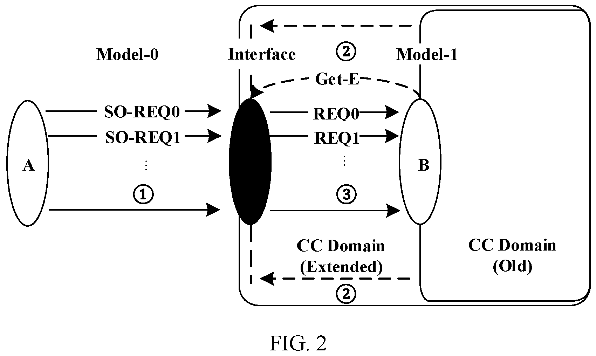

FIG. 2 is a schematic flowchart of an example of another data processing method in a conventional technology. Refer to FIG. 2. The following is specifically included. Based on a hardware coherence protocol, a coherence range is extended. A boundary between two types of storage models is included into a cache coherence domain on a weak order model side, and sequence processing is completed at a node at the boundary, to ensure a globally observable order of results.
(1) The node C at a storage model interface receives an SO request sequence (including So Req0, SO Req1, and the like) sent by the node A on a strong order model side, and determines that it needs to be ensured, on the weak order model side, that an observable order of results meets a requirement of a strong side.
(2) After receiving the SO request sequence, the node C obtains E states (E states, also referred to as CompUC, namely, exclusive states, which indicate that corresponding Cachelines are allocated to the node C for use and cannot be used by another module) from the downstream node B in parallel, to complete migration of a sequence processing node. In this process, the CC (Cache Coherence, cache coherence) domain is extended (that is, the CC domain of the node B is extended to the node C), so that the boundary node C is provided with a capability of processing coherence, to ensure an observable order of request results.

After completing sequence processing, the node C does not need to perform serial handshake with a downstream node to ensure a sequence. In this way, requests can be processed in parallel on the weak order model side, to increase a request bandwidth between models.

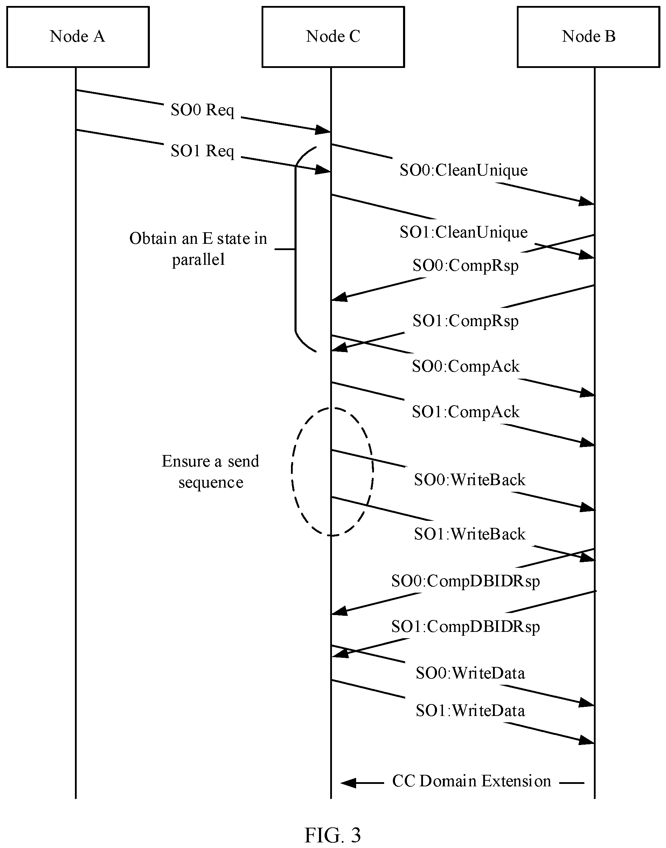

With reference to FIG. 2, the following uses a schematic flowchart of a data processing procedure shown in FIG. 3 as an example for brief description. In this scenario, when the node A (an I/O device, for example, a PCIe controller) interacts with a chip SOC, SO write requests on an I/O side enter an SOC side. The node C serves as a boundary node between the I/O and the SOC, is used to complete sequence processing, and cooperates with an internal node (namely, the node B) of the SOC to complete the requests. This improves a processing bandwidth. A submodule that implements the function in the node C is referred to as an I/O cache module. Refer to FIG. 3. The following is specifically included.
(1) The node C receives a plurality of write requests (So0 Req, SO1 Req, and the like) sent by the node A.
(2) Based on the plurality of write requests, the node C obtains an E state from the downstream node B in parallel (including sending Clean Unique (used to request the E state), receiving ComRsp (used to receive the E state), and feeding back Comp ACK (used to respond to that the E state is already received)). In addition, the CC domain is extended, and migration of a sequence processing node is completed.

After obtaining permission (namely, the E state), the node C delivers a write-back request (namely, Write BACK) to the node B based on a sequence of requests on a PCIe side, so that a globally observable order of request results is ensured, and request processing is completed in parallel.

In the method, a hardware coherence solution is used, and globally observable management of an operation result is completed on an upstream node, to avoid processing a sequence through upstream and downstream handshake, so that parallel processing of requests is implemented, and a bandwidth is increased. However, in the method, parallel processing cannot be implemented for consecutive SO request sequence with a same Cacheline address.

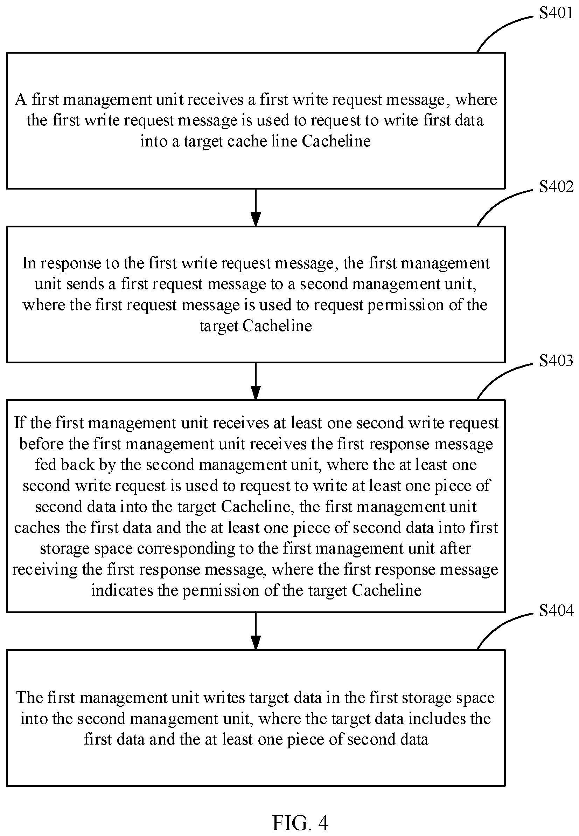

This application provides a data processing manner, to implement parallel processing of a consecutive SO request sequence with a same Cacheline address. FIG. 4 is a schematic flowchart of a data processing method according to an embodiment of this application. Refer to FIG. 4. The method specifically includes but is not limited to the following steps.

S401: A first management unit receives a first write request message, where the first write request message is used to request to write first data into a target cache line Cacheline.

For example, PCIe (namely, the node A in embodiments of this application) sends a write request message to the first management unit, to write data into the target Cacheline. The first management unit (namely, the node C in embodiments of this application) receives the write request message and obtains a Cacheline address indicated in the message. The Cacheline address indicated in the write request message is all or a part of an address of the Cacheline. In this embodiment of this application, a plurality of consecutive small data packets are used as an example for description. Therefore, small data corresponding to the small data packets in this embodiment of this application is all data with a granularity less than one Cacheline. For example, a Cacheline length is 128 bytes (which is merely an example, may be set based on actual requirements, and is not limited in this application). Correspondingly, a data packet corresponding to to-be-written data with a length less than 128 bytes is referred to as a small data packet. For example, a data packet of to-be-written data with a length of 64 bytes is a small data packet (referred to as a small packet for short in this embodiment of this application, which is not described in the following again).

S402: In response to the first write request message, the first management unit sends a first request message to a second management unit, where the first request message is used to request permission of the target Cacheline.

For example, after receiving the write request message and obtaining a target Cacheline address into which data is to be written, the first management unit sends the first request message (which may also be referred to as an E State obtain request message, a Cacheline status obtain request, or the like, and is not limited in this application) to the second management unit (namely, the node B in this embodiment of this application). The first request message is used to request a status (which may also be understood as permission) of the target Cacheline.

In this embodiment of the application, the second management unit is configured to manage a status (namely, permission) of all Cachelines. It should be noted that a Cacheline can be used by only one node (for example, the node C) at a time. In other words, use permission of a Cacheline can be given to only one node. When the node has use permission of the target Cacheline, another node cannot access (including write and read) data in the target Cacheline. In this embodiment of this application, when a node requests permission (which may also be referred to as use permission) of a single Cacheline from the second management unit, the second management unit detects whether the target Cacheline is available. This may also be understood as that the second management unit detects whether a status of the Cacheline is in an unlocked state, or that the permission of the Cacheline is not allocated to any node. In an example, if the second management unit detects that the target Cacheline is currently in an available state, that is, the target Cacheline is not occupied by another node or module, the second management unit may send an E state of the target Cacheline to the first management unit, to indicate that the first management unit is allowed to use the target Cacheline. In addition, the second management unit records that a permission status of the target Cacheline is unavailable, and permission is allocated to the first management unit. In another example, if the second management unit detects that the target Cacheline is in an unavailable state, the second management unit sends the E state of the target Cacheline to the first management unit after waiting for the target Cacheline to change to the available state (that is, another node returns the use permission of the Cacheline), to indicate that the first management unit is allowed to use the target Cacheline. In addition, the second management unit records that the permission status of the target Cacheline is unavailable, and the permission is allocated to the first management unit.

Therefore, in this embodiment of this application, there is specific waiting duration between a moment at which the first management unit sends the first write request message and a moment at which the first management unit receives a first response message (namely, the E state). The waiting duration is referred to as a merge (parallel) window in this embodiment of this application. In other words, a start point of the merge window is a moment corresponding to sending the first write request message by the first management unit, and an end point is a moment corresponding to receiving the first response message.

S403: If the first management unit receives at least one second write request before the first management unit receives the first response message fed back by the second management unit, where the at least one second write request is used to request to write at least one piece of second data into the target Cacheline, the first management unit caches, after receiving the first response message, the first data and the at least one piece of data into first storage space corresponding to the first management unit, where the first response message indicates the permission of the target Cacheline.

For example, in this embodiment of this application, if the first management unit receives, in the merge window, that is, before receiving the first response message, the at least one second write request with a same Cacheline address as the Cacheline address of the first write request, the first management unit may perform an internal interaction procedure, so that data requested to be written into the same Cacheline is cached in the storage space corresponding to the first management unit.

For example, in the merge window, if the at least one second write request with the same address is not received, or another write request with a different Cacheline address is received, processing is performed according to an I/O Cache procedure in the conventional technology.

It should be noted that "small packets with a same Cacheline address" in embodiments of this application means that Cacheline addresses, into which data is to be written, indicated by a plurality of small packets are in a same Cacheline. For example, it is assumed that an address of a first Cacheline is 0 bytes to 127 bytes. A Cacheline address indicated by a small packet 1 is 0 bytes to 63 bytes, and a Cacheline address indicated by a small packet 2 is 64 bytes to 127 bytes. In this case, the Cacheline addresses indicated by the small packet 1 and the small packet 2 are in a same Cacheline (namely, the first Cacheline). Correspondingly, the small packet 1 and the small packet 2 are small packets with a same Cacheline address.

S404: The first management unit writes target data in the first storage space into the second management unit, where the target data includes the first data and the at least one piece of second data.

For example, the first management unit writes a plurality of pieces of data with the same Cacheline address received in the merge window into a cache, and then writes the data in the cache into the second management unit. In this way, parallel processing of a plurality of small packets with the same Cacheline address is implemented, and interaction on a bus is reduced, so that latency is reduced, and a bandwidth (namely, a throughput) is improved.

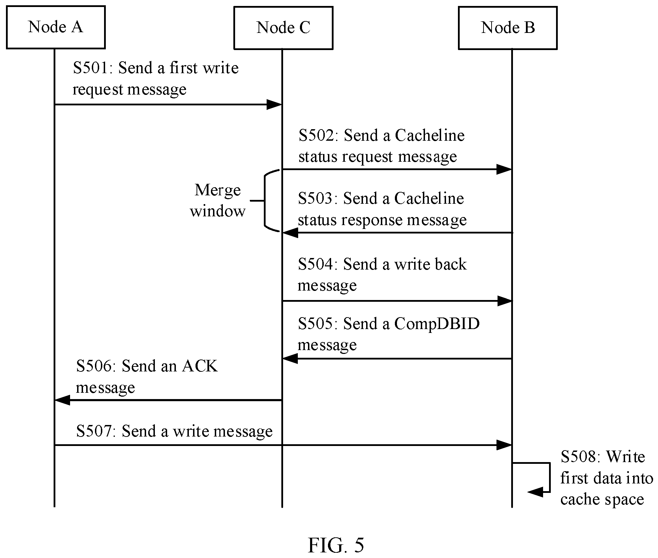

The following describes the data processing method in embodiments of this application in detail by using a specific embodiment. FIG. 5 is a schematic flowchart of an example of a data processing method. In this example, an example in which no small packet with a same Cacheline address is received in a merge window is used for description. Refer to FIG. 5. The method specifically includes but is not limited to the following steps.

S501: The node A sends a first write request message to the node C.

For example, when the node A (for example, PCIe) needs to write data, the first write request message is sent to the node C. The first write request message is used to request to write first data. The first write request message includes but is not limited to: a first Cacheline address corresponding to the first data and other control information. Optionally, the control information includes but is not limited to: a write indication, a command identifier, and the like.

For example, the first Cacheline address is a Cacheline address into which the node A expects the first data to be written. Optionally, the first Cacheline address includes but is not limited to: a first start address and a first length. The first start address indicates a start location of a Cacheline into which data is expected to be written, and the length indicates a length occupied by the data. For example, the first Cacheline address includes: a start address of 0 and a length of 64. In this case, the first Cacheline address indicated by the start address and the length is 0 bytes to 63 bytes. In other words, the Cacheline address into which the first write request message requests to write is 0 bytes to 63 bytes.

For example, the write indication is used to request to write the data. The command identifier identifies the request message. This may also be understood as that the command identifier identifies the session. Correspondingly, all subsequent interaction performed for the write request message need to carry the command identifier, to indicate that all interaction information carrying the command identifier is executed for the write request.

S502: The node C sends a Cacheline status request message to the node B.

For example, the node C obtains the first Cacheline address, the other control information, and the like in response to the first write request message.

The node C sends the Cacheline status request message (for example, a Clean Unique message) to the node B, to request an E state of a target Cacheline to which a first Cacheline belongs (for specific descriptions, refer to the foregoing descriptions). The Cacheline status request message includes but is not limited to: identification information of the node C, the first Cacheline address, an E state request indication, and the like.

For example, the identification information of the node C may be an ID of the node C. This is not limited in this application. The E state request indication is used to request the E state of the target Cacheline. This may also be understood as that the E state request indication is used to request use permission of the target Cacheline. The target Cacheline is a Cacheline in which the first Cacheline is located. Details are not described again below.

S503: The node B sends a Cacheline status response message to the node C.

For example, as described above, the node B may detect a status of the target Cacheline. When determining that the status of the target Cacheline is an available state, the node B sends the Cacheline status response message to the node C based on the identification information of the node C. The message includes but is not limited to: the E state of the target Cacheline, and indicates to allocate permission of the target Cacheline to the node C.

For example, the node B records the status of the target Cacheline, for example, records a correspondence between the target Cacheline and the identification information of the node C, to indicate that current use permission of the target Cacheline is allocated to the node C.

In this embodiment of this application, a time period between S502 and S503 is a merge window. In this example, an example in which no other small packet with the same Cacheline address is received in the merge window is used for description.

S504: The node C sends a Write Back (write back) message to the node B.

For example, the node C determines, based on the Cacheline status response message, that the use permission (which may also be understood as access permission) of the target Cacheline is obtained. The node C sends the Write Back message to the node B, to request to write the first data, and indicate to release the E state of the Cacheline. In other words, in this embodiment of this application, if consecutive write requests with the same Cacheline address are not received in the merge window, the node C releases the use permission of the Cacheline.

The Write Back message includes but is not limited to: Write Back indication information, identification information of the node C, and a first Cacheline address. The Write Back indication information is used to request to write data.

S505: The node B sends a CompDBID (Data buffer Identification, data buffer identification) message to the node C.

For example, in response to the Write Back message, the node B reclaims, based on the identification information of the node C and the first Cacheline address, permission of the target Cacheline corresponding to the node C.

In addition, the node B determines, based on the first Cacheline address, a corresponding data cache address in storage space (which may also be referred to as cache space) corresponding to the node B. The node B sends the CompDBID message to the node C, to indicate that the first data is allowed to be written. The CompDBID message includes but is not limited to: a command identifier, identification information of the node B, the data cache address, and the like.

S506: The node C sends an ACK message to the node A.

For example, the node C sends the ACK message to the node A in response to the CompDBID message. The ACK message may also be referred to as a first write response message, and indicates that the first data is allowed to be written. The ACK message includes but is not limited to: the command identifier, the identification information of the node B, the data cache address, and the like.

S507: The node A sends a write message to the node B.

For example, in response to the ACK message, the node A sends the write message (which may also be referred to as a W dat message, and is not limited in this application) to the node B based on the identification information of the node B. The write message indicates to write the data into a specified address. The write message includes but is not limited to: the first data, DBID, the command identifier, and the like.

S508: The node B writes the first data into the cache space.

For example, in response to the write message, the node B writes the first data into cache space indicated by DBID. Then, the node B may write the data in the cache space into a memory. For a specific implementation, refer to the conventional technology. Details are not described in this application.

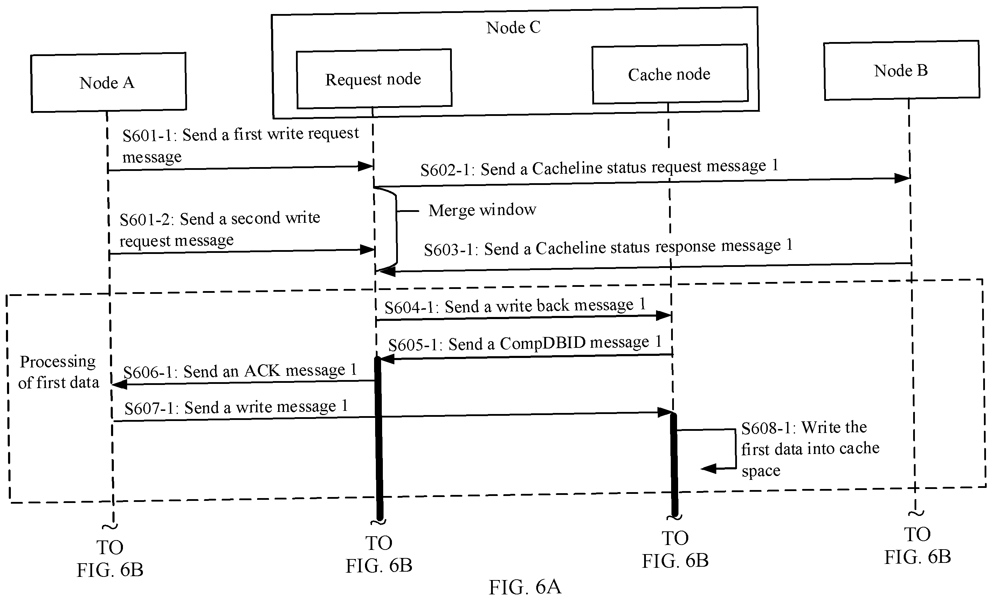

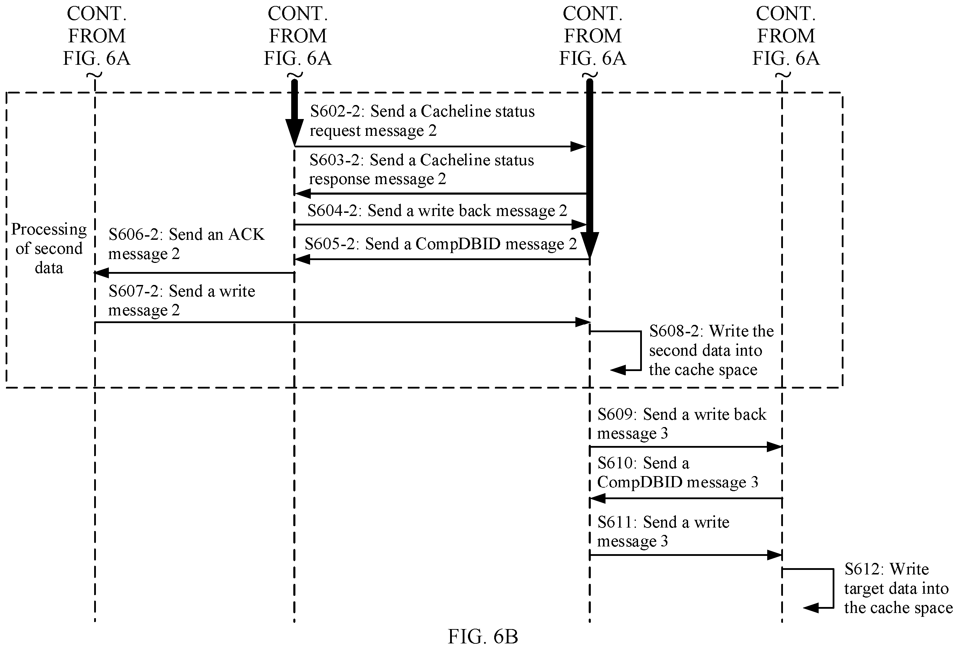

FIG. 6A and FIG. 6B are a schematic flowchart of an example of a data processing method. In this example, an example in which small packets with a same Cacheline address are received in a merge window is used for description. Refer to FIG. 6A and FIG. 6B. The method specifically includes but is not limited to the following steps.

S601-1: The node A sends a first write request message to the node C.

For example, when the node A (for example, PCIe) needs to write data, the first write request message is sent to the node C. The first write request message is used to request to write first data. The first write request message includes but is not limited to: a first Cacheline address corresponding to the first data and other control information. Optionally, the control information includes but is not limited to: a write indication, a command identifier 1, and the like.

For example, the first Cacheline address is a Cacheline address into which the node A expects the first data to be written. Optionally, the first Cacheline address includes but is not limited to: a first start address and a first length. The first start address indicates a start location of a Cacheline into which data is expected to be written, and the length indicates a length occupied by the data. For example, the first Cacheline address includes: a start address of 0 and a length of 64. In this case, the first Cacheline address indicated by the start address and the length is 0 bytes to 63 bytes. In other words, the Cacheline address into which the first write request message requests to write is 0 bytes to 63 bytes.

For example, the write indication is used to request to write the data. The command identifier identifies the request message. This may also be understood as that the command identifier identifies the session. Correspondingly, all subsequent interaction performed for the write request message need to carry the command identifier, to indicate that all interaction information carrying the command identifier is executed for the write request.

S602-1: A request node sends a Cacheline status request message 1 to the node B.

For example, the request node (which may also be referred to as a first management subunit, and is not limited in this application) in the node C obtains the first Cacheline address, the other control information, and the like in response to the first write request message.

The request node sends the Cacheline status request message 1 (for example, a Clean Unique message) to the node B, to request an E state of a target Cacheline to which a first Cacheline belongs (for specific descriptions, refer to the foregoing descriptions). The Cacheline status request message 1 includes but is not limited to: identification information of the node C, the first Cacheline address, an E state request indication, and the like.

For example, the identification information of the node C may be an ID of the node C. This is not limited in this application. The E state request indication is used to request the E state of the target Cacheline. This may also be understood as that the E state request indication is used to request use permission of the target Cacheline. The target Cacheline is a Cacheline in which the first Cacheline is located. Details are not described again below.

S601-2: The node A sends a first write request message to the node C.

In this example, the node A continues to send the second write request message to the node C. The second write request message is used to request to write second data. The second write request message includes but is not limited to: a second Cacheline address corresponding to the second data and other control information. Optionally, the control information includes but is not limited to: a write indication, a command identifier 2, and the like.

For example, the second Cacheline address is a Cacheline address into which the node A expects the second data to be written. Optionally, the second Cacheline address includes but is not limited to: a second start address and a second length. The second start address indicates a start location of a Cacheline into which data is expected to be written, and the length indicates a length occupied by the data. For example, the second Cacheline address includes: a start address of 64 and a length of 64. In this case, the second Cacheline address indicated by the start address and the length is 64 bytes to 127 bytes. In other words, the Cacheline address into which the second write request message requests to write is 64 bytes to 127 bytes.

For example, the write indication is used to request to write the data. The command identifier identifies the request message. This may also be understood as that the command identifier identifies the session. Correspondingly, all subsequent interaction performed for the write request message need to carry the command identifier, to indicate that all interaction information carrying the command identifier is executed for the write request.

S603-1: The node B sends a Cacheline status response message 1 to the node C.

For example, as described above, the node B may detect a status of the target Cacheline. When determining that the status of the target Cacheline is an available state, the node B sends the Cacheline status response message 1 to the node C based on the identification information of the node C. The message includes but is not limited to: the E state of the target Cacheline, and indicates to allocate permission of the target Cacheline to the node C.

For example, the node B records the status of the target Cacheline, for example, records a correspondence between the target Cacheline and the identification information of the node C, to indicate that current use permission of the target Cacheline is allocated to the node C.

In this embodiment of this application, a time period between S602 and S603 is a merge window. In this example, an example in which another small packet with the same Cacheline address is received in the merge window is used for description. It should be noted that, in this example, an example in which another small packet with the same Cacheline address is received in the merge window is only used for description. In another embodiment, more small packets with the same Cacheline address may be received, and a processing manner thereof is similar. Examples are not provided for description one by one in this application.

It should be noted that, in this example, to distinguish between steps performed on different write request messages, in this example, a step "X-1" indicates a step performed for the first write request message, and a step "X-2" indicates a step performed for the second write request message.

S604-1: The request node sends a write back message 1 to a cache node.

For example, after receiving the second write request message, the request node determines, based on the Cacheline address indicated by the second write request message, that the second Cacheline address indicated by the second write request message and the first Cacheline address indicated by the first write request message belong to the same target Cacheline. In other words, the first data (which may also be referred to as a first data packet) and the second data (which may also be referred to as a second data packet) are data written into a same Cacheline. It may be understood that the first data packet and the second data packet are data packets, consecutively received in the merge window, with the same Cacheline address.

It should be noted that, in this embodiment of this application, an example in which the Cacheline addresses of the first data and the second data are consecutive addresses is only used for description. In another embodiment, the first data and the second data may be inconsecutive addresses in a same Cacheline. This is not limited in this application.

For example, the request node determines that the small packets with the same Cacheline address are received in the merge window. In this case, an intra-node data processing procedure is performed, to implement parallel processing of the small packets with the Cacheline address.

Still refer to FIG. 6A and FIG. 6B. In the intra-node data processing procedure, the request node determines, based on the Cacheline status response message, that the use permission (which may also be understood as access permission) of the target Cacheline is obtained. The procedure in this example is different from the procedure in FIG. 5 in that the request node sends a Write Back message 1 to the cache node (which may also be referred to as an I/O data Cache node, and is not limited in this application). In other words, the node C still holds the use permission of the target Cacheline, and does not return the permission to the node B temporarily. In this way, in a process in which the node C performs internal procedure processing on a plurality of pieces of data to be written into the target Cacheline, another module or unit cannot access the target Cacheline, to avoid a data read/write error.

The Write Back message 1 includes but is not limited to: Write Back indication information and the first Cacheline address. The Write Back message is used to request to write the first data, and indicates that the use permission of the target Cacheline to which the first Cacheline belongs is already obtained. Optionally, the Write Back message may also carry the E state, to indicate that the use permission of the target Cacheline to which the first Cacheline belongs is already obtained. This is not limited in this application.

S605-1: The cache node sends a CompDBID message 1 to the request node.

For example, in response to the Write Back message 1, the cache node determines, based on the first Cacheline address, a corresponding data cache address in storage space corresponding to the cache node. The cache node sends the CompDBID message 1 to the request node, to indicate that the first data is allowed to be written. The CompDBID message 1 includes but is not limited to: the command identifier, the data cache address, and the like.

S606-1: The request node sends the ACK message 1 to the node A.

For example, the request node sends the ACK message 1 to the node A in response to the CompDBID message. The ACK message 1 may also be referred to as a first write response message, and indicates that the first data is allowed to be written. The ACK message includes but is not limited to: the command identifier, the identification information of the node C, the data cache address, and the like.

S607-1: The node A sends a write message 1 to the node C.

For example, in response to the ACK message 1, the node A sends the write message (which may also be referred to as a W dat message, and is not limited in this application) to the node C based on the identification information of the node C. The write message indicates to write the data into a specified address. The write message includes but is not limited to: the first data, DBID, the command identifier, and the like.

S608-1: The cache node writes the first data into cache space.

For example, in response to the write message, the cache node writes the first data into cache space indicated by DBID.

In this embodiment of this application, to implement an order preserving feature of a same Cacheline address, a cache node schedules a next CleanUnique request only after receiving a Write Back message corresponding to a previous write request and replying with a CompDBID message. In other words, as shown in FIG. 6A and FIG. 6B, after performing S605-1, the cache node may start to perform S602-2. In other words, a data processing procedure corresponding to the second write request specifically includes the following steps.

S602-2: The request node sends a Cacheline status request message 2 to the node B.

For example, the request node (which may also be referred to as a first subunit, and is not limited in this application) in the node C obtains the second Cacheline address, the other control information, and the like in response to the second write request message.

The request node sends the Cacheline status request message 2 (for example, a Clean Unique message) to the cache node, to request the E-state of the target Cacheline to which the first Cacheline belongs (for specific descriptions, refer to the foregoing descriptions). The Cacheline status request message 2 includes but is not limited to: the first Cacheline address, the E state request indication, and the like.

S603-2: The cache node sends a Cacheline status response message 2 to the request node.

For example, as described above, in S604-1, the cache node obtains the E state of the target Cacheline. Correspondingly, in this step, the cache node sends the Cacheline status response message 2 to the request node. The message includes but is not limited to: the E state of the target Cacheline, and indicates to allocate the permission of the target Cacheline to the request node.

S604-2. The request node sends a write back message to the cache node.

For example, the request node determines, based on the Cacheline status response message 2, that the use permission (which may also be understood as access permission) of the target Cacheline is obtained. The request node sends a Write Back message 2 to the cache node (which may also be referred to as an I/O data Cache node, and is not limited in this application). The Write Back message 2 includes but is not limited to: Write Back indication information and the second Cacheline address. The Write Back message 2 is used to request to write the second data.

S605-2: The cache node sends a CompDBID message 2 to the request node.

For example, in response to the Write Back message 2, the cache node determines, based on the second Cacheline address, the corresponding data cache address in the storage space corresponding to the cache node. The cache node sends the CompDBID message 2 to the request node, to indicate that the second data is allowed to be written. The CompDBID message 2 includes but is not limited to: the command identifier, the data cache address, and the like.

In this embodiment of this application, to ensure observable order preserving between data, the cache node controls replying with CompDBID, to implement observable order preserving. In this embodiment of this application, for a case of a same Cacheline address, the cache node can reply with CompDBID corresponding to a next write request only after receiving previous write data (that is, receiving the write message). In other words, after receiving the write back message, the cache node records a sequence of received write back messages. The cache node receives a corresponding write message based on the sequence of received write back messages. It may also be understood that the following procedure continues to be performed only after the corresponding to-be-written data is received.

For example, as shown in FIG. 6A and FIG. 6B, S606-1 and S607-1 corresponding to the first write request and S602-2 to S604-2 corresponding to the second write request are performed in parallel. The cache node first receives the Write Back message 1 corresponding to the first write request, and then receives the write back message 2 corresponding to the second write request. Correspondingly, a sequence of the command identifiers recorded by the cache node (or the sequence may be recorded by using other information, which is not limited in this application) is the command identifier (for example, a first command identifier) corresponding to the Write Back message 1 and the command identifier (for example, a second command identifier) corresponding to the Write Back message 2. Therefore, the cache node performs S605-2 only after receiving the data (namely, the first data) that is requested by the write back message 1 to be written. For example, it is assumed that S604-2 is performed before S607-1, the cache node receives the write back message 2, and the cache node determines, based on a sequence of currently recorded command identifiers (namely, the first command identifier), that to-be-written data corresponding to the command identifier 1 (which may also be understood as the first write message or the write back message 1) is not received yet. In this case, the cache node stores corresponding information (namely, the second command identifier) based on the sequence of received write back messages. Subsequently, the cache node receives the write message 1, and may determine, based on the command identifier, that data requested by the write message to be written corresponds to the write back message 1. The cache node writes the first data in the write message 1 into the storage address (namely, an address indicated by DBID) allocated to the first data in S605-1. In addition, the cache node performs S605-2.

S606-2: The request node sends an ACK message 2 to the node A.

For example, the request node sends the ACK message 2 to the node A in response to the CompDBID message 2. The ACK message 2 may also be referred to as a second write response message, and indicates that the second data is allowed to be written. The ACK message 2 includes but is not limited to: the command identifier, the identification information of the node C, the data cache address, and the like.

S607-2: The node A sends a write message 2 to the node C.

For example, in response to the ACK message 1, the node A sends the write message 2 (which may also be referred to as a W dat message, and is not limited in this application) to the node C based on the identification information of the node C. The write message 2 indicates to write the data into a specified address. The write message 2 includes but is not limited to: the second data, DBID, the command identifier, and the like.

S608-1: The cache node writes the second data into the cache space.

For example, in response to the write message 2, the cache node writes the second data into the cache space indicated by DBID.

S609: The cache node sends a write back message 3 to the node B.

For example, after writing the first data and the second data, the cache node sends the Write Back message 3 to the node B, to request to write the target data (including the first data and the second data). The Write Back message 3 includes but is not limited to: a third command identifier, Write Back indication information, the identification information of the node C, and a third Cacheline address (including the first Cacheline address and the second Cacheline address). The Write Back indication information is used to request to write data.

S610: The node B sends a CompDBID message 3 to the node C.

For example, in response to the Write Back message 3, the node B determines, based on the third Cacheline address, a corresponding data cache address in storage space corresponding to the node B. The node B sends the CompDBID message 3 to the node C, to indicate that the target data is allowed to be written. The CompDBID message 3 includes but is not limited to: the third command identifier, identification information of the node B, the data cache address, and the like.

S611: The cache node sends a write message 3 to the node B.

For example, in response to the CompDBID message 3, the cache node in the node C sends the write message 3 (which may also be referred to as a W dat message, and is not limited in this application) to the node B based on the identification information of the node B. The write message 3 indicates to write data into a specified address. The write message 3 includes but is not limited to: the target data, DBID, the third command identifier, and the like.

S612: The node B writes the first data into the cache space.

For example, in response to the write message 3, the node B writes the target data into the cache space indicated by DBID.

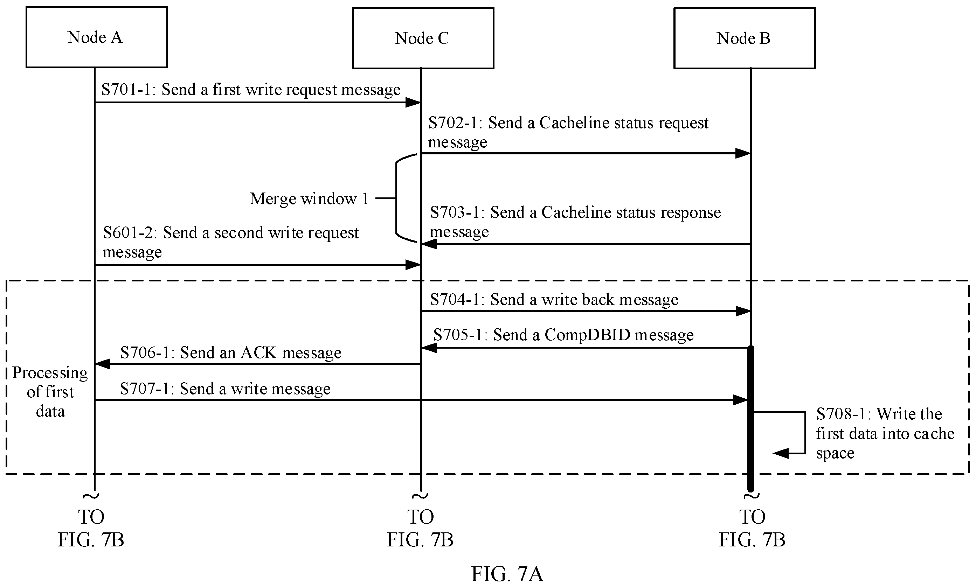

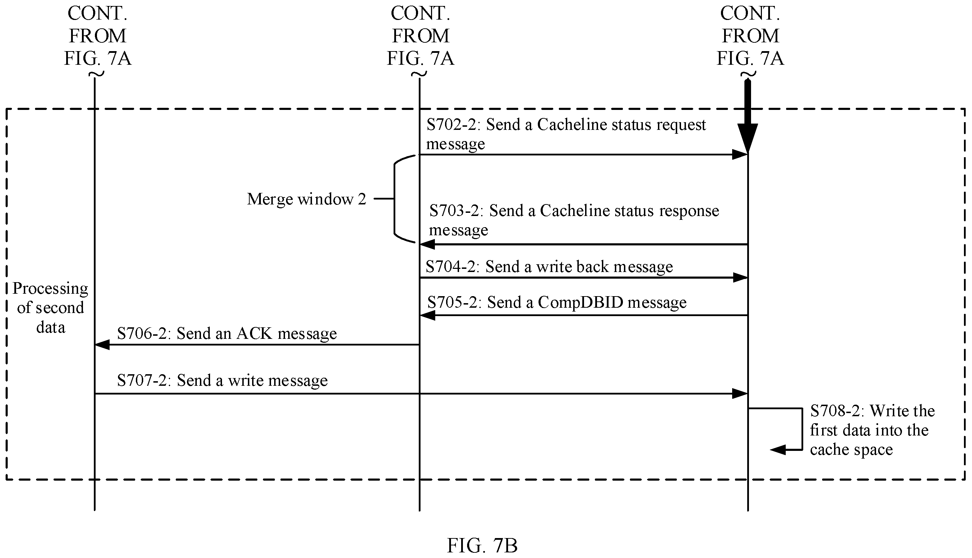

FIG. 7A and FIG. 7B are a schematic flowchart of an example of a data processing method. In this example, an example in which small packets with a same Cacheline address are received outside a merge window is used for description. Refer to FIG. 7A and FIG. 7B. The method specifically includes but is not limited to the following steps.

S701-1: The node A sends a first write request message to the node C.

S702-1: A node sends a Cacheline status request message 1 to the node B.

S703-1: The node B sends a Cacheline status response message to the node C.

In this example, if the node C (which may be specifically a request node in the node C) does not receive small packets with a same Cacheline address in a merge window 1 corresponding to the first write request, processing continues according to the procedure in FIG. 5.

For details that are not described, refer to FIG. 5 and FIG. 6A and FIG. 6B. Details are not described herein again.

S704-1: The node C sends a Write Back message to the node B.

For example, the node C determines, based on the Cacheline status response message, that the use permission (which may also be understood as access permission) of a target Cacheline is obtained. The node C sends the Write Back message to the node B, to request to write the first data, and indicate to release the E state of the Cacheline. In other words, in this embodiment of this application, if consecutive write requests with the same Cacheline address are not received in the merge window, the node C releases the use permission of the Cacheline.

The Write Back message includes but is not limited to: Write Back indication information, identification information of the node C, and a first Cacheline address. The Write Back indication information is used to request to write data.

S705-1: The node B sends a CompDBID message to the node C.

For example, in response to the Write Back message, the node B reclaims, based on the identification information of the node C and the first Cacheline address, permission of the target Cacheline corresponding to the node C.

In addition, the node B determines, based on the first Cacheline address, a corresponding data cache address in storage space (which may also be referred to as cache space) corresponding to the node B. The node B sends the CompDBID message to the node C, to indicate that the first data is allowed to be written. The CompDBID message includes but is not limited to: a command identifier, identification information of the node B, the data cache address, and the like.

S706-1: The node C sends an ACK message to the node A.

For example, the node C sends the ACK message to the node A in response to the CompDBID message. The ACK message may also be referred to as a first write response message, and indicates that the first data is allowed to be written. The ACK message includes but is not limited to: the command identifier, the identification information of the node B, the data cache address, and the like.

S707-1: The node A sends a write message to the node B.

For example, in response to the ACK message, the node A sends the write message (which may also be referred to as a W dat message, and is not limited in this application) to the node B based on the identification information of the node B. The write message indicates to write the data into a specified address. The write message includes but is not limited to: the first data, DBID, the command identifier, and the like.

S708-1: The node B writes the first data into the cache space.

For example, in response to the write message, the node B writes the first data into cache space indicated by DBID. Then, the node B may write the data in the cache space into a memory. For a specific implementation, refer to the conventional technology. Details are not described in this application.

In this embodiment of this application, to implement an order preserving feature of a same Cacheline address, a cache node schedules a next CleanUnique request only after receiving a Write Back message corresponding to a previous write request and replying with a CompDBID message. In other words, as shown in FIG. 7A and FIG. 7B, after performing S705-1, the cache node may start to perform S702-2. In other words, a data processing procedure corresponding to the second write request specifically includes the following steps.

S702-2: The node C sends a Cacheline status request message to the node B.

For example, the node C obtains second Cacheline address, other control information, and the like in response to the second write request message.

The node C sends the Cacheline status request message (for example, a Clean Unique message) to the node B, to request an E state of a target Cacheline to which a second Cacheline address belongs (for specific descriptions, refer to the foregoing descriptions). The Cacheline status request message includes but is not limited to: identification information of the node C, the second Cacheline address, an E state request indication, and the like.

For example, the identification information of the node C may be an ID of the node C. This is not limited in this application. The E state request indication is used to request the E state of the target Cacheline. This may also be understood as that the E state request indication is used to request use permission of the target Cacheline. The target Cacheline is a Cacheline in which the first Cacheline is located. Details are not described again below.

S703-2: The node B sends a Cacheline status response message to the node C.

For example, as described above, the node B may detect a status of the target Cacheline. When determining that the status of the target Cacheline is an available state, the node B sends the Cacheline status response message to the node C based on the identification information of the node C. The message includes but is not limited to: the E state of the target Cacheline, and indicates to allocate permission of the target Cacheline to the node C.

In this embodiment of this application, in S704-1, the node C already returns the use permission of the target Cacheline. Correspondingly, in this step, the node B detects that the target Cacheline is currently in an available state.

For example, the node B records the status of the target Cacheline, for example, records a correspondence between the target Cacheline and the identification information of the node C, to indicate that current use permission of the target Cacheline is allocated to the node C.

S704-2: The node C sends a Write Back message to the node B.

For example, the node C determines, based on the Cacheline status response message, that the use permission (which may also be understood as access permission) of a target Cacheline is obtained. The node C sends the Write Back message to the node B, to request to write the second data, and indicate to release the E state of the Cacheline. In other words, in this embodiment of this application, if consecutive write requests with the same Cacheline address are not received in the merge window, the node C releases the use permission of the Cacheline.

The Write Back message includes but is not limited to: Write Back indication information, the identification information of the node C, and the second Cacheline address. The Write Back indication information is used to request to write data.

It should be noted that, in a merge window 2 (that is, between S702-2 performed by the node C and S703-2), if the node C receives a write request with a same Cacheline address as the second write request message, the second write request and another write request with the same Cacheline address are processed according to the intra-node data processing procedure in FIG. 6A and FIG. 6B. Details are not described herein again. For specific steps, refer to FIG. 6A and FIG. 6B.

S705-2: The node B sends a CompDBID message to the node C.

For example, in response to the Write Back message, the node B reclaims, based on the identification information of the node C and the second Cacheline address, permission of the target Cacheline corresponding to the node C. In other words, the target Cacheline is marked as being in an available state.

In addition, the node B determines, based on the second Cacheline address, a corresponding data cache address in storage space (which may also be referred to as cache space) corresponding to the node B. The node B sends the CompDBID message to the node C, to indicate that the second data is allowed to be written. The CompDBID message includes but is not limited to: a command identifier, the identification information of the node B, the data cache address, and the like.

S706-2: The node C sends an ACK message to the node A.

For example, the node C sends the ACK message to the node A in response to the CompDBID message. The ACK message may also be referred to as a first write response message, and indicates that the second data is allowed to be written. The ACK message includes but is not limited to: the command identifier, the identification information of the node B, the data cache address, and the like.

S707-2: The node A sends a write message to the node B.

For example, in response to the ACK message, the node A sends the write message (which may also be referred to as a W dat message, and is not limited in this application) to the node B based on the identification information of the node B. The write message indicates to write the data into a specified address. The write message includes but is not limited to: the second data, DBID, the command identifier, and the like.

S708-2: The node B writes the second data into the cache space.

For example, in response to the write message, the node B writes the second data into the cache space indicated by DBID. Then, the node B may write the data in the cache space into a memory. For a specific implementation, refer to the conventional technology. Details are not described in this application.

In conclusion, a small packet received beyond the merge window is processed according to a procedure of the original I/O Cache mode (in FIG. 5), to avoid introducing a negative gain. It may be understood that, in the original I/O Cache mode, the node C is configured to manage a request. As an upstream node, the node C is configured to interact with the downstream node B based on an upstream data transmit end (for example, PCIe, or another module or chip, which is not limited in this application), to write data of the data transmit end into the node B. In this embodiment of this application, if a plurality of small packets with a same Cacheline address are received in the merge window, the node C performs the intra-data processing procedure, that is, writes a plurality of pieces of data into cache space corresponding to the node C through internal interaction, and then interacts with the node B to write the corresponding data. In this way, a quantity of times of interaction in a scenario of a plurality of data packets is effectively reduced, to reduce transmission latency on a bus. In addition, latency of intra-node interaction is greatly shortened compared with a latency of bus data interaction, to further improve an overall throughput of data processing.

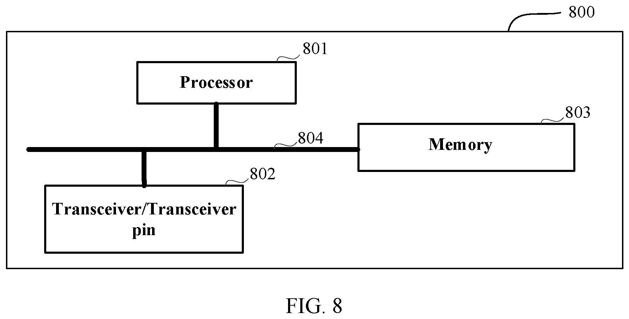

FIG. 8 is a block diagram of an apparatus 800 according to an embodiment of this application. The apparatus 800 may include a processor 801 and a transceiver/transceiver pin 802, and optionally, further include a memory 803. The processor 801 may be configured to perform the steps performed by a database in the methods in the foregoing embodiments, control a receiving pin to receive a signal, and control a sending pin to send a signal.

Components of the apparatus 800 are coupled together through a bus 804. In addition to a data bus, the bus system 804 further includes a power bus, a control bus, and a status signal bus. However, for clear description, various types of buses in the figure are marked as the bus system 804.

Optionally, the memory 803 may be configured to store instructions in the foregoing method embodiments.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on a same technical concept, an embodiment of this application further provides a computer program. When the computer program is executed by a computer, the computer program is used to implement the foregoing method embodiments. The program may be completely or partially stored in a storage medium packaged with a processor, or may be partially or completely stored in a memory not packaged with a processor.

Based on a same technical concept, an embodiment of this application further provides a processor, and the processor is configured to implement the foregoing method embodiment. The foregoing processor may be a chip.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

## Claims

1. A data processing method, comprising:
receiving, by a first management unit, a first write request message, wherein the first write request message is used to request to write first data into a target cache line Cacheline;
in response to the first write request message, sending, by the first management unit, a first request message to a second management unit, wherein the first request message is used to request permission of the target Cacheline;
if the first management unit receives at least one second write request before the first management unit receives a first response message fed back by the second management unit, wherein the at least one second write request is used to request to write at least one piece of second data into the target Cacheline, caching, by the first management unit after receiving the first response message, the first data and the at least one piece of second data into first storage space corresponding to the first management unit, wherein the first response message indicates the permission of the target Cacheline; and
writing, by the first management unit, target data into second storage space corresponding to the second management unit, wherein the target data comprises the first data and the at least one piece of second data.

2. The method according to claim 1, wherein the first management unit comprises a first management sub-node and a second management sub-node, and caching, by the first management unit after receiving the first response message, the first data and the at least one piece of data into the first storage space corresponding to the first management unit comprises:
in response to the first response message, sending, by the first management sub-node, a second request message to the second management sub-node, wherein the second request message indicates that the permission of the target Cacheline is obtained, and is used to request to write the first data into the target Cacheline;
receiving, by the first management sub-node, a second response message fed back by the second management sub-node, wherein the second response message indicates that the first data is allowed to be written;
in response to the second response message, requesting, by the first management sub-node and from the second management sub-node, to write the at least one piece of second data, and in a process of requesting, by the first management sub-node and from the second management sub-node, to write the at least one piece of second data, obtaining, by the second management sub-node, the first data, and writing the first data into the first storage space; and
obtaining, by the second management sub-node, the second data, and writing the second data into the second storage space.

3. The method according to claim 2, wherein requesting, from the second management sub-node, to write the at least one piece of second data comprises:
sending, by the first management sub-node, a third request message to the second management sub-node, wherein the third request message is used to request the permission of the target Cacheline;
receiving, by the first management sub-node, a third response message sent by the second management sub-node, wherein the third response message indicates the permission of the target Cacheline;
in response to the third response message, sending, by the first management sub-node, a fourth request message to the second management sub-node, wherein the fourth request message indicates to write a single piece of second data into the target Cacheline; and
in response to the fourth request message, obtaining, by the second management sub-node, the single piece of second data, and writing the single piece of second data into the first storage space after writing the first data into the first storage space.

4. The method according to claim 1, wherein the method further comprises:
if no other request to write data into the target Cacheline is received before the first management unit receives the first response message fed back by the second management unit, requesting, by the first management unit and from the second management unit, to write the third data into the target Cacheline.

5. The method according to claim 4, wherein requesting, by the first management unit and from the second management unit, to write the third data into the target Cacheline comprises:
sending, by the first management unit, a fifth request message to the second management unit, wherein the fifth request message is used to request to write the first data into the target Cacheline; and
in response to a fifth response message sent by the second management unit, sending, by the first management unit, a data sending indication message to a data sending module, wherein the data sending indication message indicates the data sending module to send the first data to the second management unit, and the fifth response message indicates that the first data is allowed to be written.

6. A data processing apparatus, comprising a first management unit and a second management unit, wherein
the first management unit is configured to receive a first write request message, wherein the first write request message is used to request to write first data into a target cache line Cacheline;
the first management unit is further configured to: in response to the first write request message, send a first request message to the second management unit, wherein the first request message is used to request permission of the target Cacheline;
the first management unit is further configured to: if the first management unit receives at least one second write request before the first management unit receives a first response message fed back by the second management unit, wherein the at least one second write request is used to request to write at least one piece of second data into the target Cacheline, cache, after receiving the first response message, the first data and the at least one piece of second data into first storage space corresponding to the first management unit, wherein the first response message indicates the permission of the target Cacheline; and
the first management unit is further configured to write target data in the first storage space into the second management unit, wherein the target data comprises the first data and the at least one piece of second data.

7. The apparatus according to claim 6, wherein the first management unit comprises a first management sub-node and a second management sub-node;
the first management sub-node is configured to: in response to the first response message, send a second request message to the second management sub-node, wherein the second request message indicates that the permission of the target Cacheline is obtained, and is used to request to write the first data into the target Cacheline;
the first management sub-node is further configured to receive a second response message fed back by the second management sub-node, wherein the second response message indicates that the first data is allowed to be written;
the first management sub-node is further configured to: in response to the second response message, request, from the second management sub-node, to write the at least one piece of second data, and in a process of requesting, by the first management sub-node and from the second management sub-node, to write the at least one piece of second data, the second management sub-node obtains the first data and writes the first data into the first storage space; and
the second management sub-node is configured to obtain the second data and write the second data into the second storage space.

8. The apparatus according to claim 7, wherein
the first management sub-node is further configured to send a third request message to the second management sub-node, wherein the third request message is used to request the permission of the target Cacheline;
the first management sub-node is further configured to receive a third response message sent by the second management sub-node, wherein the third response message indicates the permission of the target Cacheline;
the first management sub-node is further configured to: in response to the third response message, send a fourth request message to the second management sub-node, wherein the fourth request message indicates to write a single piece of second data into the target Cacheline; and
the second management sub-node is further configured to: in response to the fourth request message, obtain the single piece of second data, and write the single piece of second data into the first storage space after writing the first data into the first storage space.

9. The apparatus according to claim 6, wherein
the first management unit is further configured to: if no other request to write data into the target Cacheline is received before the first management unit receives the first response message fed back by the second management unit, request, from the second management unit, to write the third data into the target Cacheline.

10. The apparatus according to claim 9, wherein
the first management unit is configured to send a fifth request message to the second management unit, wherein the fifth request message is used to request to write the first data into the target Cacheline; and
the first management unit is further configured to: in response to a fifth response message sent by the second management unit, send a data sending indication message to a data sending module, wherein the data sending indication message indicates the data sending module to send the first data to the second management unit, and the fifth response message indicates that the first data is allowed to be written.

11. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform the method according to any one of claims 1 to 5.
